# EUROPÄISCHE PATENTSCHRIFT

(11) **EP 2 145 784 B1**
(45) Veröffentlichungstag und Bekanntmachung des Hinweises auf die Patenterteilung: **15.06.2011**
(21) Anmeldenummer: 09165622.3
(22) Anmeldetag: 16.07.2009
(51) Int. Cl.: B60H 1/00

(54) **Kraftfahrzeugklimaanlage**
Vehicle air conditioning device
Dispositif de climatisation de véhicule

(30) Priorität: 17.07.2008 DE 102008033597
(43) Veröffentlichungstag der Anmeldung: 20.01.2010
(73) Patentinhaber: Behr GmbH & Co. KG, 70469 Stuttgart (DE)
(72) Erfinder: Schäfer, Alfons, 73776, Altbach (DE); Ehret, Gustav, 70374, Stuttgart (DE); Rappel, Thomas, 70437, Stuttgart (DE); Engelhardt, Martin, 71254, Ditzingen (DE)
(74) Vertreter: Grauel, Andreas

(56) Entgegenhaltungen:
- WO-A1-2005/063517
- DE-A1- 10 321 392
- US-A- 5 181 553
- US-A1- 2001 025 502

## Beschreibung

Die Erfindung betrifft eine Kraftfahrzeugklimaanlage gemäß dem Oberbegriff des Anspruchs 1.

Klimaanlagen werden in Kraftfahrzeugen eingesetzt, um den Fahrzeuginnenraum auf eine für die Fahrzeuginsassen angenehme Temperatur zu bringen bzw. diese zu halten. Nach den jeweiligen Erfordernissen kann die Kraft.. fahrzeugklimaanlage dabei wirken, um die Luft in dem Kraftfahrzeuginnenraum zu erwärmen und/oder zu kühlen.

Moderne Klimaanlagen dienen dem Komfort der Fahrzeuginsassen und sollen ebenfalls die Sicherheit fördern. Bei sogenannten einzonigen Kraftfahrzeugklinaanilagen kann ein Fahrer des Kraftfahrzeugs eine gewünschte Temperatur und Gebläsestufe einstellen, Jedoch weisen derartige Kraftfahrzeugklimaanlagen den Nachteil auf, dass Fahrer und Insassen möglicherweise unterschiedliche Temperaturen als angenehm empfinden. Auch ist es mittels dieser Kraftfahrzeugklimaanlagen bei voll besetzten Kraftfahrzeugs schwlerig, für die Insassen angenehme Temperaturen vorzusehen, da sich die gekühlte Luft auf dem Weg von der Klimaanlage in den Fond immer um einige Grad erwärmt, und die warme Luft dagegen abkühlt, Bei Zweizonen-Klimaanlagen können Fahrer und Beifahrer die Temperatur getrennt einstellen, jedoch ist keine individuelle Regelung der Temperatur für die Fondinsassen des Kraftfahrzeugs vorgesehen.

Bei drei- oder vierzonigen Krafifahrzeugklimaanlagen können dagegen die Fahrzeuginsassen im Front- und Fondbereich getrennt voneinander individuell die Wunschtemperatur über entsprechende Bedieneinnchtungen einstellen. Bei vierzonigen Kraftfahrzeugklimaanlagen bedeutet dies sogar, dass in den Bereichen Front und Fond die Temperatur auf der linken und rechten Fahrzeugseite voneinander unabhängig eingestellt werden kann.

Jedoch werden mit fortschreitender Entwicklung im Klimatechnikbereich immer höhere Anforderungen an die Funktionalitäten und Komfortfunktionen derartiger mehrzoniger Kraftfahrzeugklimaantagen gestellt.

Problematisch ist beispielsweise bezüglich der vierzonigen Kraftfahrzeugklimaanlagen, bei welchen, wie oben erwähnt, der Fondbereich separat eingestellt werden kann, ein Betreiben der Kraftfahrzeugklimaanlage im Fondbereich mit einer hohen Gebläsestufe. In einem derartigen Betriebszustand drosselt dabei die Luftstrom-Steuerung bei ähnliche Gebläsespannung die Austrittsklappen der Frontzonen stark an. Dies führt im eingeregelten Zustand bei einer Kraftfanrzeuglimaanlage ohne Sekundärmaßnahmen dazu, dass die Fonddbereich-Ausblastemperaturen um 7 bis 11 K ansteigen. Diese erhöhte Resterwärmung ist auf den luftseitigen Strömungsweg quer durch die auf den in den Wellrippen einer Heizeinrichtung vorgesehenen Heizkörperkiemen bei gleichzetiger Erwärmung der Luft zurückzuführen. Das funktionsbedingte Aufbringen der Wärmetauscherlamellen begünstigt diese Strömung, da hierbei der Druckausgleich in Querrichtung vergleichsweise schnell erfolgen kann. Auch bei zweizonigen Klimaanlagen können ergleichbare Probleme auftreten, beispielsweise wenn auf der Beifahrerseite eine hohe Gebläsestufe eingestellt wird.

Im Stand der Technik sind abhängig vom Differenzdruck getriebene Klappenmechanismen in Kraftfahrzeugklimaantagen bekannt, die eine Steuerung der Luftströmung bzw. der Luftströmungsmenge vornehmen. Nicht aktuatorisch betriebene Klappen geben jedoch in der Zonentrennung den Luftströmungsweg nur bei gleichem Gefälle des Druckunterschiedes frei. Dies führt jedoch wieder zu Nachteilen während der Aufheizphase in den Fondzonen, welche durch einen Kaltlufteinbruch verursacht werden. Auch entstehen bei dieser Konfiguration erhöhte Kosten sowie unerwünschte akustische Effekte solcher nicht aktuatorisch betriebenen Klappen.

Um das akustische Verhalten eines Mehrzonenklimageräts zu verbessern, ist in DE 103 21 392 A1 eine Kraftfahrzeugklimaanlage vorgeschlagen worden, welche mindestens zwei Klappen aufweist, die einer von zwei Klimazonen zugeordnet sind, wobei die diese Klappen durchströmende Luft zu einem gemeinsamen Bereich der entsprechenden Klimazone geleitet wird. Das Vorsehen einer Mehrzahl von Klappen je Klimazone ermöglicht eine Steuerung der Luftströmung über diese Mehrzahl von Klappen, ohne dass enge Spalte in Folge eines Androssels einer Klappe erforderlich sind, wodurch hohe Strömungsgeschwindigkeiten vermieden werden. Bei der Drosselung der Luftströmung über die verkleinerte Wärmetauscherfläche treten kleinere Strömungsgeschwindigkeiten der Luft auf sowie ein gleichmäßigres Strömungsbild, wodurch sich das akustische Verhalten des Mehrzonenklimageräts verbessert.

In WO 2005/063517 A1 wird eine Kraftfahrzeugklimaanlage mit mehreren Zonen beschrieben, wobei eine Luftströmungs-Ausgleichsvorrichtung zwischen mindestens zwei der einzelnen Klimazonen vorgesehen ist. Die Luftströmungs-Ausgleichsvorrichtung ist in Form einer Klappe, welche im Defrostbetrieb geöffnet wird, welche in einer Trennwand vorgesehen ist, ausgestaltet. In einer anderen Ausführungsform ist dagegen ein Bypass-Luftkanal vom Fond-Mischraum zum Front-Mischraum vorgesehen, der als Luftströmungs-Ausgleichsvorrichtung dient.

Die im Stand der Technik beschriebenen Konfigurationen sind jedoch aufwändig und daher nicht kostengünstig hersteilbar.

Daher ist es die Aufgabe der vorliegenden Erfindung, eine Kraftfahrzeugklimaanlage zur Verfügung zu stellen, bei welcher die Nacherwärmung der Fondluft durch Sekundärströmungen auf kostengünstige Art und Weise reduziert bzw. minimiert wird.

Diese Aufgabe der vorliegenden Erfindung wird durch eine Kraftfahrzeugklimaanlage mit den Merkmalen gemäß Anspruch 1 gelöst. Vorteilhafte Weiterbildungen der vorliegenden Erfindung sind in den Unteransprüchen definiert.

Erfindungsgemäß wird eine Kraftfahrzeugklimaanlage mit mehreren Klimazonen bereitgestellt, welche zumindest eine Heizeinrichtung, welche in dem Strömungsweg eines Luftstroms der in der Kraftfahrzeugklimaanlage zirkullierenden Luft angeordnet ist, und zumindest eine Trennwand umfasst, welche eine erste Klimazone und eine zweite Klimazone trennt. Die zumindest eine Trennwand weist eine Druckausgleichsöffnung auf, welche einen Teilströmungsweg für einen Teilluftstrom des Hauptluftstroms vorsieht. Eine Druckdifferenz zwischen den Klimazonen wird dabei aufgehoben bzw. minimiert,

Für den Fall einer drei- oder vierzonigen Klimaanlage kann insbesondere ein Großteil der Luft aus dem Mischraum direkt in den Fondbereich strömen. Durch die erfindungsgemäß in der zumindest einen Trennwand vorgesehene Druckausgleichsöffnung kann somit eine Nacherwärmung der Fondluft minimiert werden, ohne dass zusätzliche Teile bzw. Zusatzelemente, wie beispielsweise zusätzlicne Klappen oder Bypasskanäle, erforderlich sind. Ähnlich ist dies für den Fall einer zweizonigen klimaanlage möglich.

Gemäß einer bevorzugten Ausführungsform weist die Heizeinrichtung zumindest ein Trennelement auf, welche einen Raum, welcher insbesondere einer Klimazone entspricht, in der Heizeinrichtung abtrennt. Durch die Kombination der Heizeinrichtungs-Zonentrennung und der Druckausgleichsöffnung an der zumindest einen Trennwand wird insbesondere bei einer drei- oder vierzonigen Klimaanlage der gewünschte Effekt der Minimierung der Fond-Resterwärmung weiter verbessert bzw. bei einer zweizonigen Klimaanlage die Minimierung der Resterwärmung der jeweils anderen Zone.

Vorzugsweise ist das zumindest eine Trennelement in der Heizeinrichtung im Wesentlichen ausgerichtet mit der zumindest einen Trennwand angeordnet, welche eine erste und zweite Klimazone trennt, so dass die durch die Trennwände bewirkte Zonentrennung in Wesentlichen der durch das zumindest eine Trennelement verursachten Zonentrennung in der Heizeinrichtung entspricht.

Gemäß einer weiteren bevorzugten Ausführungsform ist das zumindest eine Trennelement durch Aufbringen eines Harzes, insbesondere eines Kunstnarzes, auf Elementen der Heizeinrichtung, insbesondere auf Wellrippen der Heizeinrichtung, gebildet. Dies stellt eine besonders einfache und somit kostengünstige Lösung dar.

Bevorzugt ist auch, wenn das zumindest eine Trennelement als streifenförmiges Element ausgebildet ist. Das streifenförmige Element wird dabei auf den Wellrippen der Heizeinrichtung aufgebracht und dichtet somit effektiv und auf einfache Weise die in den Wellrippen vorgesehenen Heizkörperkiemen ab, durch welche nicht gewünschte interzonige Querströmungen aufgrund von Druckdifferenzen auftreten können.

Vorzugsweise weisen die Wellrippen Kiemen auf, welche durch das TrennElement, wie oben erwährt, verklebt bzw. abgedichtet werden.

In einer weiteren bevorzugten Ausführungsform der Erfindung ist die zumindest eine Trennwand im Wesentlichen senkrecht zu der Heizeinnchtung ausgerichtet.

Darüber hinaus ist gemäß einer vorteilhaften Weiterbildung des Kraftfahrzeugklimaanlage zumindest eine Klappe, insbesondere eine Temperaturmischklappe vorgesehen, welche in einem Mischraum angeordnet ist, um den Strömungsweg des in der Kraftfahrzeugklimaanlage zirkulierenden Luftstroms zu steuern, insbesondere freizugeben oder zu blockierten. Besonders bevorzugt sind zumindest zwei, drei oder vier Temperaturmischklappen vorgesehen.

Vorzugsweise ist die erste Kliniazone für den Frontbereich des Kraftfahrzeugs und die zweite Klimazone für den Fondbereich des Kraftfahrzeugs vorgesehen.

Weiter bevorzugt ist die erste Klimazonen für den Frontbereich auf der Fahrerseite des Kraftfahrzeugs und die zweite Klimazone für den Frontbereich auf der Beifahrerseite des Kraftfahrzeugs vorgesehen.

Vorteilhafterweise weist die Kraftfahrzeugklimaanlage zwei Klimazonen auf, wobei eine erste Zone einem rechten Frontbereich des Kraftfahrzeugs und eine zweite Zone einem linken Frontbereich des Kraftfahrzeugs zugeordnet ist. Zusätzlich kann für den Fall einer Kraftfahrzeugklimaanlage drei Klimazonen noch eine weitere Zone für den gesamten Fondbereich vorgesehen sein.

Besonders bevorzugt weist die Kraftfahrzeugklimaanlage vier Klimazonen auf, wobei eine erste Zone einem rechten Frontbereich des Kraftfahrzeugs, eine zweite Zone einem rechten Fondbereich des Kraftfahrzeugs, eine dritte Zone einem linken Frontbereich des Kraftfahrzeugs und eine vierte Zone einem linken Fondbereich des Kraftfahrzeugs zugeordnet ist. Dies ermöglicht es, dass jeder Fahrzeuginsasse unabhängig von seiner Sitzposition im Kraftfahrzeuginnenraum die gewünschte Temperatur individuell einstellen bzw. bestimmen kann.

Auch ist es bevorzugt, dass die Druckausgleichsöffnung beabstandet von der Heizeinrichtung in der Trennwand angeordnet ist. Somit wird eine Wärmeübertragung der Heizeinrichtung auf die vorbeiströmende Luft verhindert. Besonders bevorzugt ist die DrucKausgleichsöffnung in einem Bereich in der Trennwand angeordnet, welche von im Wesentlichen kalter Luft umströmt wird.

Gemäß noch einer weiteren bevorzugten Ausführungsform weisen die Klappen zumindest eine erste Klappe und zumindest eine zweite Klappe auf, wobei die zumindest eine erste Klappe im Wesentlichen senkrecht zu der zumindest einen zweiten Klappe angeordnet sind. Es kann gemäß einer noch weiteren bevorzugten Ausführungsform auch eine Vielzahl von ersten Klappen übereinander angeordnet sein.

Um eine besonders effektive Reduzierung bzw. Minimierung der Fond-Resterwärmung zu erreichen, weist gemäß einer bevorzugten Ausführungsform die DrucKausgleichsöffnung eine Länge auf, welche in einem Bereich von 35 mm bis 70 mm liegt. Besonders bevorzugt ist dabei die Länge von 35 mm. Je nach Konfiguration und Funktionalität der Kraftfahrzeugklimaanlage kann die Länge jedoch variabel sein.

Bevorzugt ist weiterhin, wenn das zumindest eine Trennelement aus Moltopren oder einem anderen elastomeren Dichtstoff oder Schaumstoff hergestellt ist.

Vorzugsweise sind die Frontluftmenge, welche in den Frontbereich des Kraftfahrzeugs eingespeist wind, und die Fondluftmenge, welche in den Fondbereich des Kraftfahrzeugs eingespeist wird, separat regelbar.

Schließlich umfaßt die Kraftfahrzeugklimaanlage vorzugsweise ein Gehäuse, insbesondere ein Luftführungsgehäuse, in welchem weiterhin ein Verdampfer zum Kühlen des Luftstroms und/oder ein elektrischer Zuheizer und/oder ein Gebläse angeordnet sind.

Im Folgenden wird die Erfindung anhand eines Ausführungsbeispiels unter Bezugnahme auf die Zeichnung detailliert erläutert. In der Zeichnung zeigen:
- Fig. 1A: einen schematisch dargestellten Horizontalschnitt durch eine Kraft- fahrzeugklimaanlage gemäß dem Stand der Technik;
- Fig. 1B: einen schematisch dargestellten Längsschnitt durch die in Fig. 1A dargestellte Kraftfahrzeugklimaanlage;
- Fig. 2: einen horizontalen Schnitt durch einen Teil einer Kraftfahreugkli- maanlage gemäß dem Stand der Technik:
- Fig. 3: einen horizontalen Schnitt durch einen Teil einer Kraftfahrzeugkli- maanlage gemäß einer Ausführungsform der Erfindung.

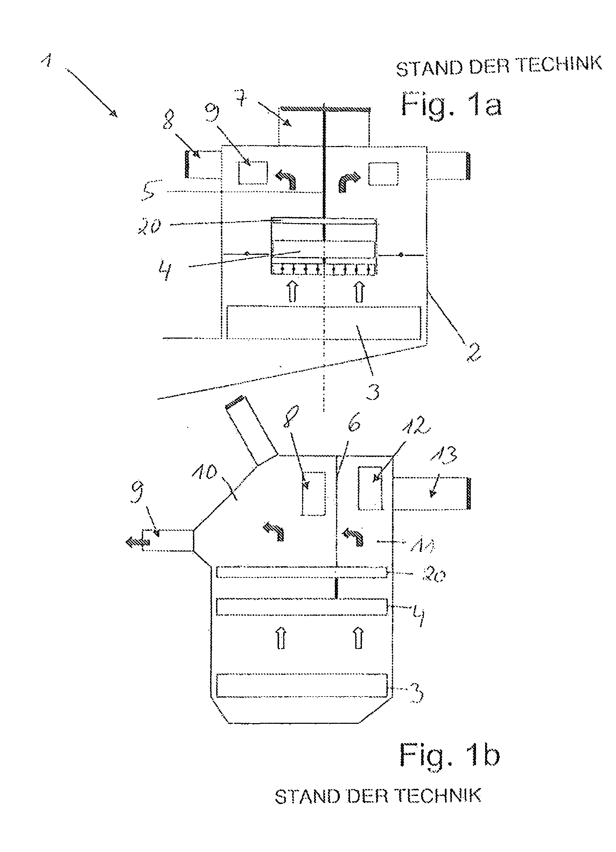

In Fig. 1A ist eine vierzonige Kraftfahrzeugklimaanlage 1 mit vier Klimazonen (nicht dargestellt) gemäß dem Stand der Technik dargestellt. In einem Gehäuse 2 sind ein Verdampfer 3, eine Heizeinrichtung 4 und ein Zuheizer 20 angeordnet. Zwischen dem Verdampfer 3 und der Heizeinrichtung 4 ist eine Längstrennwand 5 ausgebildet, so dass eine Zonentrennung in die rechte und linke Fahrzeughälfte bewirkt wird. Ausgehend von der durch die längs verlaufende Trennwand 5 unterteilten rechten und linken Hälften sind jeweils ein Luftkanal 7 für die Innenraumbelüftung, ein Luftkanal 8 für die Fußräume und ein Luftkanal 9 für ein Entfrosten der Windschutzscheibe vorgesehen. Quer zur längs verlaufenden Trennwand 5 ist eine zweite Trennwand 6 zur Trennung in Front- und Fondbereich vorgesehen Wie aus Fig. 1B, welche einen schematisch dargestellten Schnitt in Längsrichtung durch die in Fig. 1A gezeigte Kraftfahrzeugklimaanlage 1 darstellt, erkannt werden kann, unterteilt die zweite Trennwand 6 einen Mischraum für einen Frontbereich 10 und einen Fondbereich 11. An dem Mischraum für den Fondbereich 11 sind weiterhin ein Luftkanal für den Fondfußraum 12 und ein Luftkanal für den Fondbereich 13 des Kraftfahrzeugs angeordnet.

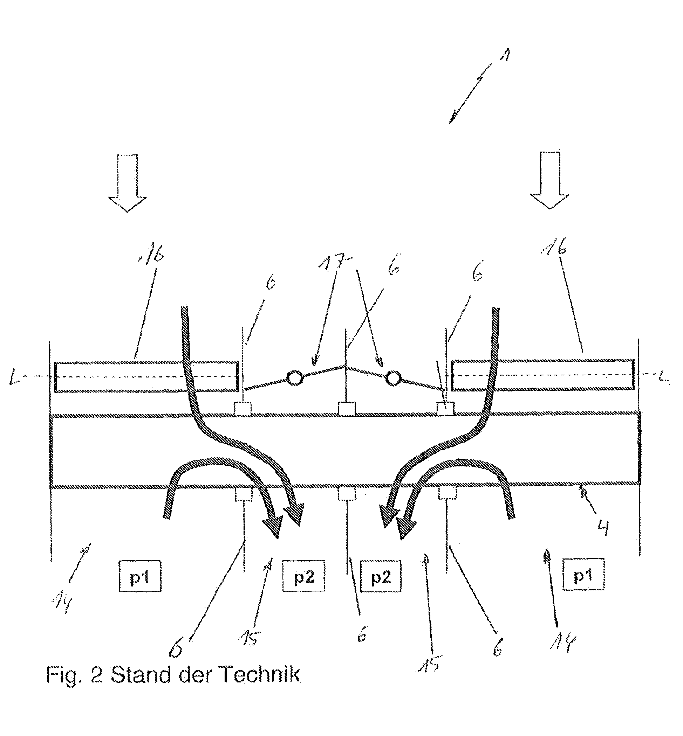

Fig. 2 zeigt einen Ausschnitt einer Kraftfahrzeugklimaanlage 1 gemäß dem Stand der Technik, in welchem der Strömungsweg bzw. der Verlauf des durch die Kraftfahrzeugklimaanlage 1 zirkulierenden Luftstroms (dargestellt durch zwei senkrechte Pfeile) durch die Heizeinrichtung 4 schematisch dargestellt ist. Die Luft strömt dabei durch die geöffneten Kaltluftklappen (nicht dargestellt, unter der Heizeinrichtung 4 der Kraftfahrzeugklimaanlage 1) ein. Senkrecht zu der Heizeinrichtung 4 angeordnet weist die Kraftfahrzeugklimaanlage 1 Trennwände 6 auf, welche einen Mischraum in Klimazonen für den Frontbereich 14 und Klimazonen für den Fondbereich 15 des Kraftfahrzeugs unterteilen. Weiterhin sind erste 16 und zweite Temperaturmischklappen 17 in dem Mischraum angeordnet, wobei die ersten Temperaturmischklappen 16 im Wesentlichen senkrecht zu dem Temperaturmischklappen 17 angeordnet sind. Die ersten 16 und zweiten Temperaturmischklappen 17 sind als Warmluftklappen ausgebildet, da sie den Luftweg durch den Heizkörper öffnen und sperren bzw. drossein können. Die gestrichelte Linie, welche bezüglich der ersten Temperaturmischklappen 16 eingezeichnet ist, Kennzeichnet eine Längsachse L der ersten Temperaturrachklappen.

Gemäß der hier dargestellten Anordnung von Trennwänden 6 gemäß dem Stand der Technik können aufgrund der senkrecht zur Heizeinrichtung 4 verlaufenden Zonentrennung durch die Trennwände 6 bei Druckunterschieden auf der Heizeinrichtungs-Abströmseite Querströmungen durch die in den Wellrippen (nicht dargestellt) der Heizeinrichtung 4 vorgesehenen Heizkörperkiemen (nicht dargestellt) auftreten. In einem Betriebszustand, in welchem der Fondbereich des Kraftfahrzeugs abzukühlen ist und durch die Regelung oder eine manuelle Einstellung des Fahrers oder Beifahrers bedingt nur eine geringe Luftmenge für den Frontbereich angefordert wird, sind beispielsweise die Luftaustrittsklappen in den Frontbereich stark angedrosselt. Halt der Frontbereich die gewünschte Temperatur im Wesentlichen erreicht, so befindet er sich im sog. eingeregelten Zustand und die ersten temperaturmischklappen 16, weiche als Temperaturmischklappen oder warmluftklappen für den Frontbereich wirken, sind ungedrosselt (hier etwa nur zu 20 % geöffnet). Um eine stärkere Abkühlung des Fondraums zu erreichten, sind die Temperaturmischklappen 17, welche als Temperaturmischklappen oder Warmluftklappen für den Fondbereich wirken, geschlossen (zu 0 % geöffnet), wobei die Kaltluftklappen, die in einem Bereich unter dem Heizkörper liegen selbstverständlich geöffnet sind. Der Druck p1 in der Klimazone für den Frontbereich 14 ist dann größer, als der Druck p2 in der Klimazone für den Fondbereich 15, Die Luftströmung (dargestellt durch die schwarzen Pfeile) zielt somit in Richtung des geringeren statischen Drucks, hier p2, im Fondabgang der Kraftfahrzeugklimaanlage 1. Dies führt zu der unerwünschten Resterwärmung, welche auf den luftseitigen Strömungsweg quer durch die Kiemen der Wellrippen der Heizeinrichtung 4 bei gleichzeitiger Erwärmung der Luft zurückzuführen ist.

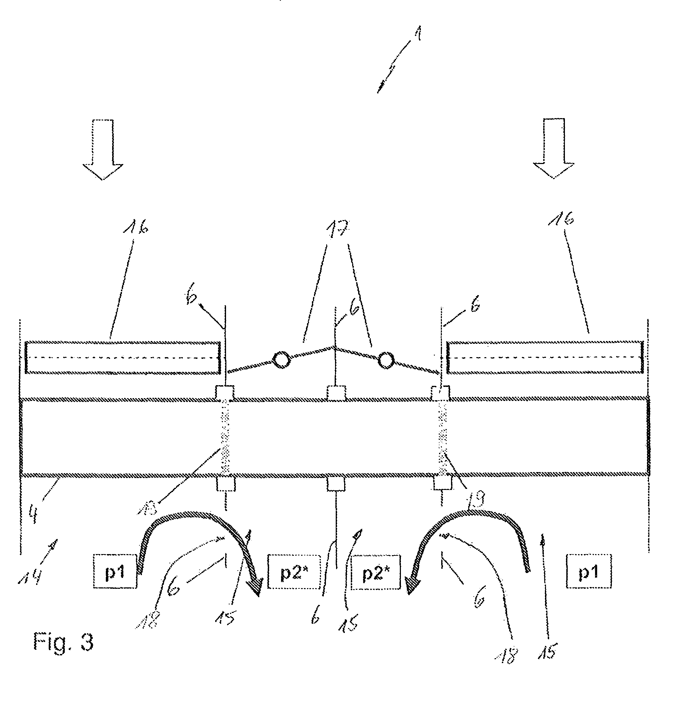

In Fig. 3 ist ein horizontaler Schnitt durch einen Teil einer Kraftfahrzeugklimaanlage 1 gemäß einer Ausführungsform der Erfindung dargestellt. Die Anordnung der Temperaturmischklappen 16, 17, ausgebildet als Warmluftklappen, erfolgt wie in dem in Fig. 2 dargestellten Beispiel. Die Temperaturmischklappen, die als Kaftluftklappen ausgebildet sind und im Wesentlichen den Öffnungsguerschnitt eines oder mehrerer, die Heizeineinrichtung 4 umgehenden, Kaltluftkanäle steuern oder regeln, sind in Fig. 3 nicht dargestellt und befinden sich im Wesentlichen in einem Bereich unterhalb der Heizeinrichtung 4. Alternativ könnten Kalt- und Warmluftklappen auch kombiniert, beispielsweise als zwei miteinander verbundene und um eine gemeinsame Achse schwenkbare Klappenflügel ausgebildet sein.

Auf die Wellrippen der Heizeinrichtung 4 sind Trennelemente 19 in Form von Streifen aus Moltropren aufgebracht, welche die in den Wellrippen der Heizeinrichtung 4 vorgesehenen Kiemen verkleben bzw. diese im Wesentlichen abdichten. Die Streifen können aber auch aus einem anderen elastomere Dichtmaterial oder Schaumstoff bestehen, welche vergleichbare Dichteigenschaften aufweisen. Somit wird mittels der Trennelemente 19, welche im Wesentlichen ausgerichtet zu den Trennwänden 6 verlaufen, einerseits eine Zonentrennung in der Heizeinrichtung bezüglich des Front- und Fondbereichs erzielt. Gleichzeitig wird die Zonentrennung außerhalb der Heizeinrichlung 4, welche durch die Trennwände 6 vorgesehen wird, dadurch aufgehoben, dass eine Druckausgleichsöffnung 18 in jeder Trennwand 6 vorgesehen ist, welche eine Klimazone des Fondbereichs 15 von einer Klimazone des Frontbereichs 14 abtrennt. Die Druckausgleichsöffnung 18 bietet somit einen Strömungsweg für einen Teilluftstrom in größerer Entfernung zu der betriebswarmen Heizeinrichtung 4, wodurch der Druck p1 in etwa gleich dem DrucK p2* ist. So kann der Großteil der Luft aus dem Mischraum direkt in die zweite Klimazone für den Fondbereich 15 strömen (dargestellt durch den schwarzen Pfeil), ohne dabei durch die betriebswarme Heizeinrichtung, 4 passieren zu müssen. Durch die hier dargestellte erfindungsgemäße Lösung zur Reduzierung der Fond-Resterwarmung kann der Anstieg der Fondausblas-Temperaturen bei der dargestellten Klappenstellung, welche derjenigen, welche in Zusammenhang mit Fig. 2 beschrieben wurde, entspricht auf weniger als 5 K reduziert werden. Die Lage der Druckausgleichsöffnung 18 ist dabei so gewähit, dass ein großer bzw. maximaler Abstand zu der Heizeinrichtung 4 gegeben ist. Die DrucKausgleichsöffnung 18 kann jegliche geeignete Form aufweisen. Mögliche Formen sind unter anderem runde, rechteckige, keilförmige und ovale Druckausgleichsöffnungen. Eine bevorzugte Länge der Druckausgleichsöffnung 18 liegt beispielsweise in dem Bereich von 35 bis 70 mm. Jedoch hängt die Größe und Position der Druckausgleichsöffnung 18 von der jeweiligen speziellen Anwendung bzw. von der Kraftfahrzeugklimaanlage ab, in welche diese Konfiguration implementiert werden soll.

Insgesamt betrachtet kann mit der erfindungsgemäßen Kraftfahrzeugklimaanlage 1 die Fond-Resterwärmung stark reduziert werden bzw. eine minimale Nacherwärmung der Fondluft auf einfache und kostengünstige Weise eingehalten werden. Auch kann eine große Funktionssicherheit mittels der erfindungsgemäßen Kraftfahrzeugklimaanlage 1 gewährleistet werden.

## Patentansprüche

1. Kraftfahrzeuglimaanlage zu mit mehreren Klimazonen (14, 15), welche zumindest eine Heizeinrichtung (4), welche in dem Strömungsweg eines Luftstroms der in der Kraftfahrzeugklimaanlage (1) zirkulierenden Luft angeordnet ist, und zumindest eine Trennwand (6) umfasst, welche eine erste Klimazone (14) und eine zweite Klimazone (15) trennt,
**dadurch gekennzeichnet, dass**
die zumindest eine Trennwand (6) eine Druckausgleichsöffnung (18) aufweist, welche einen Teiiströmungsweg für einen Teilluftstrom des Hauptluftstroms vorsieht.

2. Kraftfahrzeugklimaanlage (1) nach Anspruch 1,
**dadurch gekennzeichnet, dass**
die Heizeinrichtung (4) zumindest ein Trennelement (19) aufweist, wel. ches einen Raum, welcher insbesondere einer Klimazone (14, 15) entspricht, in der Heizeinrichtung (4) abtrennt.

3. Kraftfahrzeugklimaanlage (1) nach Anspruch 2,
**dadurch gekennzeichnet, dass**
das zumindest eine Trenneiement (19) in der Heizeinrichtung (4) im Wesentlichen ausgerichtet mit der zumindest einen Trennwand (6) angeordnet ist, welche eine erste und zweite Klimazone (14, 15) trennt.

4. Kraftfahrzeugklimaarlage (1) nach Anspruch 2 oder 3,
**dadurch gekennzeichnet, dass**
das zumindest eine Trennelemeent (19) durch Aufbringen eines Harzes, insbesondere eines Kunstharzes, auf Elementen der Heizeinrichtung (4), insbesondere auf Wellrippen der Heizeinrichtung (4), gebildet ist.

5. Kraftfahrzeugklimaanlage (1) nach einem der Ansprüche 2 bis 4,
**dadurch gekennzeichnet, dass**
das zumindest eine Trennelement (19) als streifenförmiges Element ausgebildet ist.

6. Kraftfahrzeugklimaaniage (1) nach Anspruch 4 oder 5,
**dadurch gekennzeichnet, dass**
die Wellrippen Klemen ausweisen, welche durch das Brennelement (19) verklebt bzw. abgedichtet sind.

7. Kraftfahrzeuglimaanlage (1) nach einem der Ansprüche 1 bis 6,
**dadurch gekennzeichnet, dass**
die zumindest eine Trennwand (6) im Wesentlicher senkrecht zu der Heizeinrichtung (4) ausgerichtet ist.

8. Kraftfahrzeugklimaanlage (1) nach einem oder mehreren der Ansprüche 1 bis 7.
**dadurch gekennzeichnet, dass**
die Kraftfahrzeugklimaanlage (1) zumindest eine Klappe, insbesondere eine Temperaturmiscklappe (16, 17) aufweist, welche in einem Mischraum angeordnet ist, um den Strömungsweg des in der Kraftfahrzeugklimaanlage (1) zirkulierenden Luftstroms zu steuern, insbesondere freizugeben oder zu blockieren.

9. Kraftfahrzeugklimaanlage (1) nach einem oder mehreren der Ansprüche 1 bis 8,
**dadurch gekennzeichnet, dass**
die Kraftfahrzeugklimaanlage (1) vier Klimazonen aufweiset, wobei eine erste Zone einem rechten Frontbereich des Kraftfahrzeugs, eine zweite Zone einem rechten Fondbereich des Kraftfahrzeugs, eine dritte Zone einem linken Frontbereich des Kraftfahrzeugs und eine vierte Zone einem linken Fontbereich des Kraftfahrzeugs entspricht.

10. Kraftfahrzeugklimaanlage (1) nach einem der Ansprüche 1 bis 9,
**dadurch** gekenntzeichnet, dass
die Druckausgleichsöffnung (18) beabstandet von der Heizeinrichtung (4) in der Trennwand (6) ausgebildet ist.

11. Kraftfahrzeugklimaaniage (1) nach einem oder mehreren der Ansprüche 8 bis 10,
**dadurch gekennzeichnet, dass**
die Temperaturmischklappen zumindest eine erste Klappe (16) und zumindest eine zweite Klappe (17) aufweisen, wobei die zumindest eine erste Klappe (16) im Wesentlichen senkrecht zu der zumindest einen zweiten Klappe (17) angeordnet ist.

12. Kraftfanrzeugktimaanlage (1) nach einem oder mehreren der Ansprüche 1 bis 11,
**dadurch gekennzeichnet, dass**
die Druckausgleichsöffnung (18) eine Länge aufweist, welche in einem Bereich von 35 mm bis 70 mm liegt.

13. Kraftfahrzeugktimaanlage (1) nach einem oder mehreren der Ansprüche 2 bis 12,
**dadurch gekennzeichnet, dass**
das zumindest eine Trennelement (19) aus Moltopren hergestellt ist.

14. Kraftfahrzeugklimaanlage (1) nach einem oder mehreren der Ansprüche 1 bis 13,
**dadurch gekennzeichnet, dass**
die erste Klimazone (14) für den Frontbereich des Kraftfahrzeugs und eine zweite Klimazone (15) für den Fondbereich des Kraftfahrzeugs vorgesehen ist.

15. Kraftfahrzeugklimaanlage (1) nach einem oder mehreren der Ansprüche 1 bis 14,
**dadurch gekennzeichnet, dass**
die Kraftfahrzeugklimaanlage (1) ein Gehäuse (2) aufweist, in welchem ein Verdampfer (3) zum Kühlen des Luftstroms und/oder ein elektrische Zuheizer (20) und/oder ein Gebläse angeordnet sind.

## Claims

1. A vehicle air conditioning system (1) having a plurality of climatic zones (14, 15), which comprises at least one heating device (4) disposed in the flow path of an air flow of the air circulating in the vehicle air conditioning system (1), and at least one partition wall (6) which separates a first climatic zone (14) and a second climactic zone (15),
**characterized in that** the at least one partition wall (6) comprises a pressure-compensation opening (18) which provides a partial flow path for a partial air flow of the main air flow.

2. The vehicle air conditioning system (1) according to claim 1, **characterized in that** the heating device (4) comprises at least one separating element (19) which separates a space - which corresponds to a climatic zone (14, 15) in particular - in the heating device (4).

3. The vehicle air conditioning system (1) according to claim 2, **characterized in that** the at least one separating element (19) is disposed in the heating device (4) substantially aligned with the at least one partition wall (6) which separates a first and a second climatic zone (14, 15).

4. The vehicle air conditioning system (1) according to claim 2 or 3, **characterized in that** the at least one separating element (19) is formed by the application of a resin, in particular a synthetic resin, onto elements of the heating device (4), in particular on to corrugated fins of the heating device (4).

5. The vehicle air conditioning system (1) according to one of the claims 2 to 4, **characterized in that** the at least one separating element (19) is designed as a strip-shaped element.

6. The vehicle air conditioning system (1) according to claim 4 or 5, **characterized in that** the corrugated fins comprise fins which are bonded or sealed through the separating element (19).

7. The vehicle air conditioning system (1) according to one of the claims 1 to 6, **characterized in that** the at least one partition wall (6) is oriented substantially perpendicularly to the heating device (4).

8. The vehicle air conditioning system (1) according to one or more of the claims 1 to 7, **characterized in that** the vehicle air conditioning system (1) comprises at least one flap, in particular a temperature blending door (16, 17), which is disposed in a mixing chamber to control the flow path of the air flow circulating in the vehicle air conditioning system (1), in particular to release or block same.

9. The vehicle air conditioning system (1) according to one or more of the claims 1 to 8, **characterized in that** the vehicle air conditioning system (1) has four climatic zones, wherein a first zone corresponds to a right front region of the motor vehicle, a second zone corresponds to a right rear region of the motor vehicle, a third zone corresponds to a left front region of the motor vehicle, and a fourth zone corresponds to a left rear region of the motor vehicle.

10. The vehicle air conditioning system (1) according to one of the claims 1 to 9, **characterized in that** the pressure-compensation opening (18) is situated at a distance away from the heating device (4) in the partition walk (6).

11. The vehicle air conditioning system (1) according to one or more of the claims 8 to 10, **characterized in that** the temperature blinding doors comprise at least a first flap (16) and at least a second flap (17), wherein the at least one first flap (16) is disposed substantially perpendicular to the at least one second flap (17).

12. The vehicle air conditioning system (1) according to one or more of the claims 1 to 11, **characterized in that** the pressure-compensation opening (18) has a length in a range of 35 mm to 70 mm.

13. The vehicle air conditioning system (1) according to one or more of the claims 2 to 12, **characterized in that** the at least one separating element (19) is made of moltopren.

14. The vehicle air conditioning system (1) according to one or more of the claims 1 to 13, **characterized in that** the first climate zone (14) is provided for the front region of the motor vehicle, and a second climate zone (15) is provided for the rear region of the motor vehicle.

15. The vehicle air conditioning system (1) according to one or more of the claims 1 to 14, **characterized in that** the vehicle air conditioning system (1) comprises a housing (2) in which an evaporator (3) for cooling the air flow, and/or an additional electrical heater (20) and/or a fan are disposed.

## Revendications

1. Système de climatisation (1) d'un véhicule automobile à plusieurs zones de climatisation (14, 15), qui comprend au moins un dispositif de chauffage (4) qui est disposé dans la trajectoire d'écoulement d'un flux d'air de l'air circulant dans le système de climatisation (1) du véhicule automobile, et au moins une paroi de séparation (6) qui sépare une première zone de climatisation (14) et une deuxième zone de Climatisation (15),
**caractérisé en ce que** la paroi de séparation (6) au moins au nombre de un présente une ouverture de compensation de pression (18) qui prévoit une trajectoire d'écoulement partiel pour un flux d'air partiel du flux d'air principal.

2. Système de climatisation (1) d'un véhicule automobile selon la revendication 1, **caractérisé en ce que** le dispositif de chauffage (4) présente au moins un élément de séparation (19) qui, dans le dispositif de chauffage (4), sépare un espace qui correspond en particulier à une zone de climatisation (14, 15).

3. Système de climatisation (1) d'un véhicule automobile selon la revendication 2, **caractérisé en ce que** l'élément de séparation (19) au moins au nombre de un est disposé dans le dispositif de chauffage (4), en étant pratiquement aligné avec la paroi de séparation (6) au moins au nombre de un qui sépare une première et une deuxième zone de climatisation (14, 15).

4. Système de climatisation (1) d'un véhicule automobile selon la revendication 2 ou 3, **caractérisé en ce que** l'élément de séparation (19) au moins au nombre de un est formé par application d'une résine, en particulier d'une résine synthétique, sur des éléments du dispositif de chauffage (4), en particulier sur des ailettes ondulées du dispositif de chauffage (4).

5. Système de climatisation (1) d'un véhicule automobile selon l'une quelconque des revendications 2 à 4, **caractérisé en ce que** l'élément de séparation (19) au moins au nombre de un est configuré comme un élément en forme de bande.

6. Système de climatisation (1) d'un véhicule automobile selon la revendication 4 ou 5, **caractérisé en ce que** les ailettes ondulées présentent des ouïes qui sont collées ou rendues étanches par l'élément de séparation (19).

7. Système de climatisation (1) d'un véhicule automobile selon l'une quelconque des revendications 1 à 6, **caractérisé en ce que** la paroi de séparation (6) au moins au nombre de un est alignée pratiquement de façon perpendiculaire au dispositif de chauffage (4).

8. Système de climatisation (1) d'un véhicule automobile selon l'une ou plusieurs des revendications 1 à 7, **caractérisé en ce que** le système de climatisation (1) du véhicule automobile présente au moins un volet, en particulier un volet mélangeur de température (16, 17) qui est disposé dans un espace de mélange, pour commander, en particulier pour dégager ou bloquer à trajectoire d'écoulement du flux d'air circulant dans le système de climatisation (1) du véhicule automobile.

9. Système de climatisation (1) d'un véhicule automobile selon l'une ou plusieurs des revendications 1 à 8, **caractérisé en ce que** le système de climatisation (1) du véhicule automobile présente quatre zones de climatisation, où une première zone correspond à un secteur avant droit du véhicule automobile, une deuxième zone à un secteur arrière droit du véhicule automobile, une troisième zone à un secteur avant gauche du véhicule automobile et une quatrième zone à un secteur avant gauche du véhicule automobile.

10. Système de climatisation (1) d'un véhicule automobile selon l'une quelconque des revendications 1 à 9, **caractérisé en ce que** l'ouverture de compensation de pression (18) est configurée, dans la paroi de séparation (6), en étant espacée du dispositif de chauffage (4).

11. Système de climatisation (1) d'un véhicule automobile selon l'une ou plusieurs des revendications 8 à 10, **caractérisé en ce que** les volets mélangeurs de température présentent au moins un premier volet (16) et au moins un deuxième volet (17), où le premier volet (16) au moins au nombre de un est disposé en étant pratiquement perpendiculaire au deuxième volet (17) au moins au nombre de un.

12. Système de climatisation (1) d'un véhicule automobile selon l'une ou plusieurs des revendications 1 à 11, **caractérisé en ce que** l'ouverture de compensation de pression (18) présente une longueur qui se situe dans une plage comprise entre 35 mm et 70 mm.

13. Système de climatisation (1) d'un véhicule automobile selon l'une ou plusieurs des revendications 2 à 12, **caractérisé en ce que** l'élément de séparation (19) au moins au nombre de un est réalisé en moltoprène.

14. Système de climatisation (1) d'un véhicule automobile selon l'une ou plusieurs des revendications 1 à 13, **caractérisé en ce que** la première zone de climatisation (14) est prévue pour le secteur avant du véhicule automobile et une deuxième zone de climatisation (15) pour le secteur arrière du véhicule automobile.

15. Système de climatisation (1) d'un véhicule automobile selon l'une ou plusieurs des revendications 1 à 14, **caractérisé en ce que** le système de climatisation (1) du véhicule automobile présente un carter (2) dans lequel sont disposés un évaporateur (3) servant au refroidissement du flux d'air et / ou un dispositif de chauffage électrique auxiliaire (20) et / ou une soufflante.
